# EUROPEAN PATENT APPLICATION

(11) **EP 2 053 320 A1**
(43) Date of publication of application: **29.04.2009**
(21) Application number: 07425669.4
(22) Date of filing: 24.10.2007
(51) Int. Cl.: F24F 13/02, F16L 59/02, E04B 1/61

(54) **Joint system for joining ends of panels made of insulated material**

(71) Applicant: P3 S.r.l., 35010 Ronchi di Villafranca Padovana (Padova) (IT)
(72) Inventor: Griggio, Luciano c/o P3 S.r.l., 35010 Ronchi di Villafranca Padovana (Padova) (IT)
(74) Representative: Bottero, Claudio

(57) **Abstract**

It is illustrated a joint system (1; 1') for joining end portions (2; 2') of at least one panel (3; 3') made of pre-insulated material comprising a joining device (4; 4'; 4") provided, at opposite parts of a longitudinal centreline plane (π) of the same, with a first (5; 5'; 5") and a second (6; 6'; 6") longitudinal seat, each of said seats (5; 5'; 5", 6; 6'; 6") being adapted to house one of said end portions (2; 2') of said at least one panel (3; 3'), said joining device (4; 4'; 4") comprising means (8; 8'; 8") for being fixed to the panel (3; 3') adapted to be engaged in a removable manner with respective fixing countermeans associated with said at least one panel (3; 3').

There are furthermore illustrated a joining means (4; 4'; 4"), a panel (3; 3') and a duct (15; 15') for air-conditioning systems obtained therefrom, a method for manufacturing panels (3; 3'), a method for joining the end portions (2; 2') of panels (3; 3') made of pre-insulated material, as well as a method for manufacturing ducts (15; 15') for air-conditioning systems.

## Description

### Background of the invention

The present invention refers to a joint system for joining the ends of panels made of pre-insulated material.

In particular, the present invention concerns a joint system for joining the ends of panels made of pre-insulated material used for manufacturing ducts for ventilation, heating and air-conditioning systems.

Furthermore, the present invention concerns a method of manufacturing ducts comprising such panels.

### Related art

The use of pre-insulated panels for manufacturing air-conditioning, ventilation and heating systems is widely known in the field.

In the present context, the term "pre-insulated panel" is intended to indicate a composite panel provided with an insulating material before the panel is mounted to form ducts or in any case before being used.

Generally, insulated panels, suitably cut and assembled, are used to form ducts for transporting air at a medium/low pressure and at a low rate.

Currently, said ducts are made by glueing end portions of several pre-insulated panels. In some cases the ducts are formed by a single panel whereon weakening lines are suitably performed.

In the present context, the term "weakening line" indicates a line obtained by removing material by means of partial cutting, that is a cut that does not cross the entire thickness of the panel, but is made starting from one of its faces up to a predetermined depth which is smaller than the thickness of the panel.

The panel is then bent at such weakening lines and its ends are glued in such a manner to form a duct.

Subsequently, it is possible to support the glueing with adhesive tapes applied at the glued ends.

Such known techniques have several drawbacks. Foremost, it should be born in mind that; once applied, the glueing agent requires drying time. Not only does this imply greater times of manufacture of the ducts, but also increases difficulties when aligning the panels alongside and the possibility of losing, during the processing period, the alignment attained.

Another drawback of such known techniques regards the irreversibility of the chemical type of fixing in that once the ends of the panels are glued, it is no longer possible to disassemble the duct thus obtained in order to obtain the panels once again, for example in case of maintenance operations or in case of poor alignment at the end of the drying time, unless the same are cut and thus making them useless.

In addition, such techniques often have problems of low pneumatic and hydraulic tightness due to poor alignment of the panels. For this reason silicon materials are often used to reduce such defects. However, there are cases wherein poor alignment defects cannot be rectified at all.

Lastly, in case of ducts arranged adjacent to walls, floors or ceilings, difficulties regarding the application of the adhesive tape might arise.

Therefore, the present invention has the object of providing a joint system for joining the ends of panels made of pre-insulated material capable of overcoming at least partially the abovementioned drawbacks.

Another object of the present invention is to provide a method of joining panels made of pre-insulated material and a method of manufacturing ducts free from the abovementioned drawbacks.

### Summary of the invention

According to the first aspect thereof, the invention refers to a joint system for joining the ends of panels made of pre-insulated material comprising:
a joining device provided, at opposite parts of a longitudinal centreline plane thereof, with a first and a second longitudinal seat, each of said seats being adapted to house one of said end portions of said at least one panel, said joining device comprising means for being fixed to the panel adapted to be engaged in a removable manner with respective fixing countermeans associated with said at least one panel.

Providing such joint system, it is possible to overcome the aforementioned drawbacks. In particular, such a type of system results to be simple, with good pneumatic and hydraulic tightness properties and applicable even in restricted spaces.

In the present context, the terms "longitudinal" and "radial" refer to the invention during use. In other words, the term "longitudinal" indicates the direction extending following the length of the panel or duct, while "radial" indicates the direction extending from the internal towards the external of the panel or duct.

Advantageously, said fixing countermeans comprise grooves, obtained at the end portions of the panel, adapted to be engaged in a removable manner with said fixing means of the joining device.

Preferably, said grooves are obtained in the thickness of the panel at the two opposite end portions.

According to a second aspect thereof, the invention regards a joining device for joining end portions of at least one panel made of pre-insulated material provided, at opposite parts of a longitudinal centreline of the same, with a first and second longitudinal seat, each of said seats being adapted to house one of said end portions of said at least one panel, said joining device comprising means for being fixed to the panel.

According to a preferred embodiment, said joining device comprises a radially internal shaped guide flap and a radially external shaped guide flap extended astride the longitudinal centreline plane of the joining device itself and connected to each other by at least a central body, said radially internal and external shaped guide flaps and said central body defining the first and the second seat housing the end portions of the panel.

Preferably, said radially internal shaped guide flap and a radially external shaped guide flap comprise two semi-portions of shaped guide flap, symmetrically arranged with respect to the longitudinal centreline plane and forming an angle α and β respectively with said longitudinal centreline plane.

Such angles α and β are substantially equal.

Preferably, both angle α and angle β are comprised in the range between 20° and 90°.

According to a preferred embodiment, said fixing means comprise at least two fixing flaps rigidly connected to said central body, such flaps forming an angle γ with said longitudinal centreline plane which is substantially equal to α and β.

Such angles α, β and γ defme the relative positions of the two panels to be joined.

Preferably, said angle γ is comprised in the range between 20° and 90°.

Advantageously, the fixing flaps are substantially T-shaped.

According to one embodiment, the joining device is provided with housing means for an angular element, such means preferably comprise a cavity adapted for the insertion of said angular element.

Through such angular element, its is possible to connect two joining devices, whose longitudinal centreline planes π are not parallel to each other, when it is required by construction requirements.

In addition, the insertion of said angular element allows to strengthen the duct formed with such joining devices.

The joining device is preferably made of polymeric material and, in a particularly preferred manner, it is made of at least one of the following materials: polyvinyl chloride, nylon, polymeric material reinforced with reinforcement fibres.

Preferably, said polymeric material is a thermosetting material, and more preferably it is a thermosetting resin.

According to an alternative embodiment, said joining device is made of metallic material and, preferably, aluminium.

According to a third aspect thereof, the invention concerns a panel made of pre-insulated material for manufacturing a duct for air-conditioning systems comprising fixing countermeans adapted to be engaged in a removable manner with respective fixing means associated with a joining device, as described in the following.

Advantageously, said fixing countermeans comprise grooves, obtained at the end portions of the panel.

Preferably, said grooves are obtained in the thickness of the panel.

According to a preferred embodiment, the panel made of pre-insulated material comprises at least a weakening line adapted to facilitate the panel bending operation during the mounting thereof.

Advantageously, the panel comprises at least an external layer and an insulating layer and, preferably even an internal layer arranged in such a manner that the insulating layer is interposed between said external layer and said internal layer.

At least one among the external layer and the internal layer comprises aluminium.

The insulating layer comprises at least one of the materials selected from the group comprising: expanded polyurethane, expanded polyisocyanurate, phenolic foam, mineral wool.

According to a fourth aspect thereof, the invention concerns a duct for air-conditioning systems comprising:
- at least one panel made of pre-insulated material as described in the following; and
- at least one joining device as described in the following.

According to a fifth aspect thereof, the invention concerns a method of manufacturing panels made of pre-insulated material for manufacturing ducts for air-conditioning systems comprising the steps of:
- providing at least one panel made of pre-insulated material;
- providing the panel with fixing countermeans adapted to be engaged in a removable manner with respective fixing means associated with a joining device as described subsequently.

Preferably, this last step comprises the operation of performing grooves at end portions of the panel.

In addition, advantageously, the method comprises the step of performing at least one weakening line in the panel.

According to a sixth aspect thereof, the present invention concerns a method of joining the ends of the panels made of pre-insulated material comprising the steps of:
a. providing at least one panel made of pre-insulated material as described in the following;
b. nearing the end portions of said at least one panel and joining them by means of at least one joining device as described in the following.

According to a last aspect thereof, the invention regards a method of manufacturing a duct for air-conditioning systems comprising the steps of:
i. preparing at least one panel made of pre-insulated material as described in the following;
ii. nearing the end portions of said at least one panel and joining them by means of at least one joining device as described subsequently in such a manner to form a duct.

In such manner, it is possible to attain a method of joining panels and a method of manufacturing ducts which are simple, rapid, reversible and free from aligning and tightness problems.

Preferably, said method comprises, before step ii of nearing the end portions of said panel in such a manner to form a duct, even the step of suitably bending the panel following a bending direction transverse to the weakening lines, in case the latter are provided.

Advantageously, said method provides, before bending the panel, for the application of an amount of glueing agent at the bending lines, in such a manner to enhance the stability of the duct.

Other preferred characteristics of the joint system for joining ends of panels made of pre-insulated material, of the related method of joining the same, and of the method of manufacturing ducts according to the present invention are illustrated in the dependent claims whose content is herein enclosed for reference.

### Brief description of the figures

Features and advantages of the invention will be clear from the following description of some examples of preferred systems for joining the ends of the panels, of joining devices, of panels, of ducts made with the same and of the related methods of: manufacturing a panel, joining the ends of the panels and manufacturing ducts according to the invention, made - for illustrative and non-limiting purposes - with reference to the drawings attached wherein:
- Figures 1a - 1e show the steps of the method of manufacturing ducts according to a first embodiment of the invention, by means of using a joint system for joining the ends of the panel according to a first embodiment of the invention;
- Figure 2 shows a sectional view of a joining device of the joint system according to the first embodiment of the invention;
- Figure 3 shows a sectional view of a joining device of the joint system according to a second embodiment of the invention;
- Figures 4a - 4e show the steps of the method of manufacturing ducts according to a second embodiment of the invention, by means of a joint system for joining the ends of panels according to the second embodiment of the invention; and
- Figures 5a and 5b respectively show perspective and sectional views of a joining device according to a third embodiment of the invention.

### Detailed description of the preferred embodiments

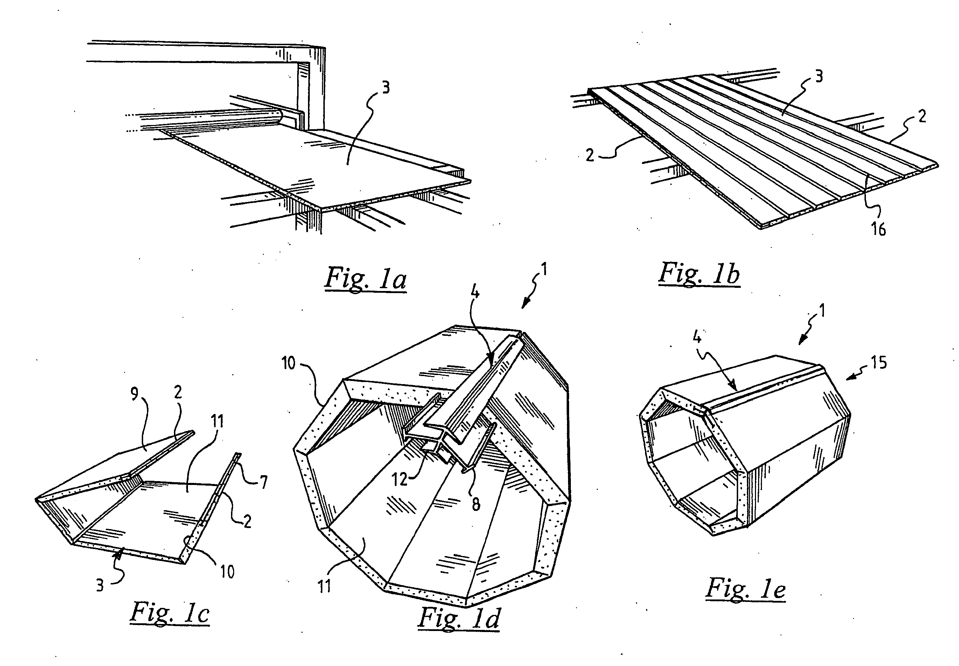

With reference to figures 1a-1e, a joint system for joining end portions 2 of at least one panel 3 made of pre-insulated material, according to a first embodiment of the present invention, is entirely indicated by 1.

Such joint system 1 comprises a joining device 4 provided, at opposite parts of a longitudinal centre line plane π of the same, of a first 5 and a second 6 longitudinal seat. Each of said seats 5, 6 is adapted to house an end portion 2 of the panel 3. The joining device 4 also comprises means 8 for being fixed to the panel 3 adapted to be engaged in a removable manner with respective fixing countermeans associated with the panel 3.

According to such first embodiment, said fixing countermeans comprise grooves 7 made at the end portions 2 of the panel 3. Such grooves 7 are adapted to be engaged in a removable manner with said fixing means 8 of the joining device 4.

As shown in particular in figure 1c, said grooves 7 are obtained in the thickness of the panel.

The joining device 4 comprises a radially internal shaped guide flap 12 and a radially external shaped guide flap 13 extended astride the longitudinal centreline plane π of the joining device 4 itself. Such internal 12 and external 13 shaped guide flaps are connected to each other by at least one central body 14 in such a manner to defme with the latter the first 5 and the second 6 seat for housing the end portions 2 of the panel 3.

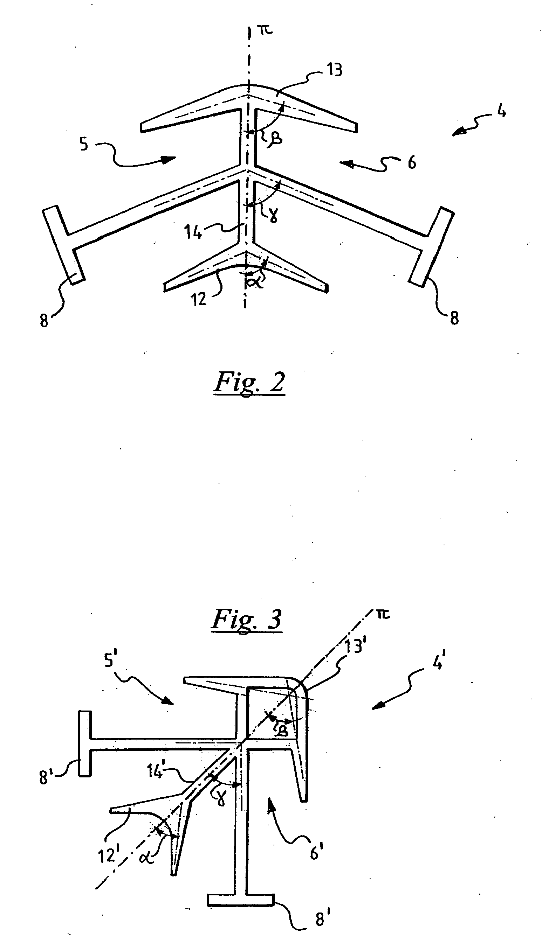

With special reference to figure 1d and also with reference to figure 2, it can be observed that the radially internal shaped guide flap 12 and the radially external shaped guide flap 13 comprise two semi-portions of a shaped guide flap, symmetrically arranged with respect to the longitudinal centreline plane π of the joining device 4 and respectively forming angles α and β with the same plane.

In other words, each semi-portion of a radially internal shaped guide flap 12 forms with the longitudinal centreline plane π an angle α, while each semi-portion of a radially external shaped guide flap 13 forms with the longitudinal centreline plane π an angle β.

Said angles α and β are substantially equal. In particular, they are both comprised in the range between 20° e 90°.

As observable in figure 2, α and β are equal to approximately 67.5°.

The fixing means 8 comprise at least two fixing flaps rigidly connected to said central body 14, such fixing flaps forming with the longitudinal centreline plane π an angle γ which is substantially equal to α and β.

In particular, said angle γ is comprised in the range between 20° and 90°. And, in the first embodiment, it is equal to approximately 67.5°.

The aforementioned angles α, β and γ define the reciprocal position of the panels once the step of joining the same has been completed.

The fixing flaps are substantially T-shaped and, analogously, the grooves 7 obtained in the panel 3, adapted to house such flaps, have a T-section.

The joining device 4 is made of polymeric material and, preferably, it is made of at least one among the following materials: polyvinyl chloride, nylon, polymeric material reinforced with reinforcement fibres.

In case such joining device 4 is made of reinforced polymeric material, the reinforcement fibres are selected from the group comprising: glass fibres, aramidic fibres and carbon fibres.

Preferably, said polymeric material is a thermosetting material, and more preferably it is a thermosetting resin.

According to an alternative embodiment, the joining device is made of metallic material, preferably aluminium.

The panel 3 made of pre-insulated material is provided with fixing countermeans adapted to be engaged in a removable manner with the fixing means 8 associated with the joining device 4.

Said fixing countermeans comprise grooves 7, obtained at the end portions 2 of the panel 3.

As observable in figure 1c, such grooves 7 are made in the thickness of the panel 3.

The panel 3 made of pre-insulated material comprises at least one weakening line 16. In particular, in the first embodiment, the weakening lines are seven, in such a manner to allow the manufacture of a duct with an octagonal section.

Additionally, it comprises at least one external layer 9 and one insulating layer 10.

As visible in figures 1a - 1e, the panel 3 comprises an external layer 9, an internal layer 11 and an insulating layer 10 interposed between said external layer 9 and said internal layer 11.

The external layer 9 and/or internal layer 11 preferably comprises aluminium.

On the contrary, the insulating layer 10 comprises at least one of the materials selected form the group comprising: expanded polyurethane, expanded polyisocyanurate, phenolic foam, mineral wools.

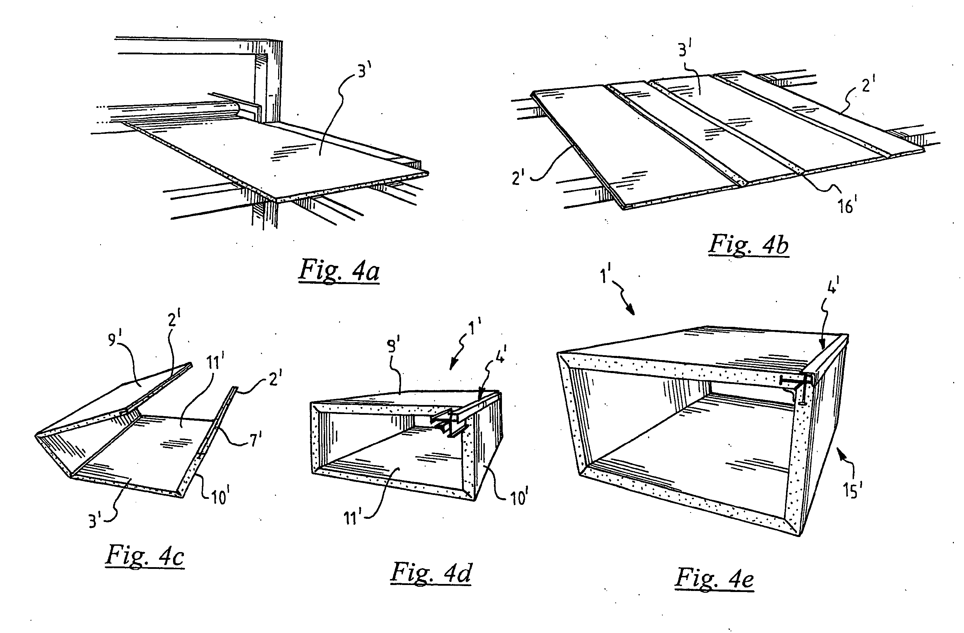

In the following description and in figures 3 and 4a - 4e, the joint system elements, of the joining device and panel according to the second embodiment of the invention which are structurally or functionally equal to the ones illustrated previously with reference to the first embodiment will be indicated by analogous reference numbers provided with an apex.

According to the second embodiment of the invention, shown in figures 3 and 4a - 4e, the angles α, β and γ are approximately 45°, in such a manner that the two panels 3' connected by the joining element 4' are perpendicular, and the duct 15' thus formed is rectangular. For this reason, the weakening lines 16' made in the panel 3' are three.

Figures 1e and 4e show ducts 15; 15' for air-conditioning systems comprising:
- a panel 3; 3' made of pre-insulated material as described previously; and
- a joining element 4; 4' as described previously.

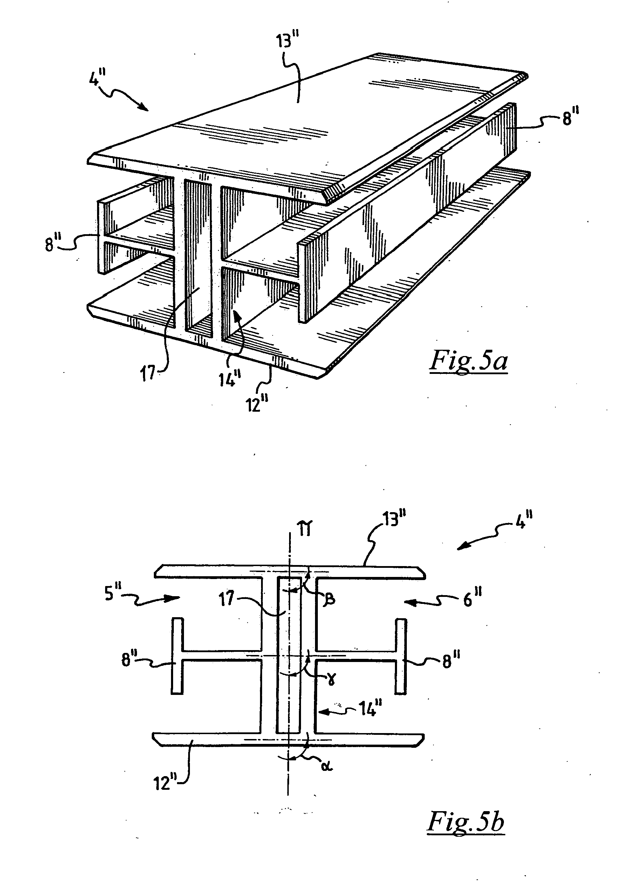

In the following description and in figures 5a and 5b, the joint system elements according to the third embodiment of the invention which are structurally or functionally equal to the ones illustrated previously with reference to the first and second embodiment will be indicated with analogous reference numbers provided with two apexes.

According to such third embodiment of the invention, the angles α, β and γ are arranged at approximately 90°, in such a manner that the two panels connected by the joining element 4" are coplanar.

Furthermore, according to this last embodiment, the joining device 4" is provided with housing means of an angular element not shown in the figures. Said housing means preferably comprise a gap 17 adapted for the insertion of corresponding connection means of said angular element.

Through such angular element, it is possible to connect two joining devices, whose longitudinal centreline planes π are not parallel to each other, when it is required by construction needs.

In addition, said angular element has the purpose of strengthening the duct comprising such joining devices 4, 4', 4".

Following is the description of a preferred embodiment of the method of manufacturing panels 3 made of pre-insulated material for manufacturing ducts 15 for air-conditioning systems.

According to such embodiment, the method of manufacturing panels 3 comprises the steps of:
- providing at least one panel 3 made of pre-insulated material;
- providing the panel 3 with fixing countermeans adapted to be engaged in a removable manner with respective fixing means 8 associated with a joining device 4 as described previously.

In particular, the step of providing the panel 3 with fixing countermeans comprises the operation of performing grooves 7 at the end portions 2 of the panel 3.

Said grooves 7 are obtained in the thickness of the panel 3.

In addition, said method comprises the step of performing at least one weakening line 16 in the panel 3.

In particular, in the preferred embodiment, such method comprises the operation of performing seven weakening lines 16 on the panel 3, in such a manner to obtain a panel 3 for manufacturing a duct 15 with an octagonal section.

According to a second embodiment, the method of manufacturing panels 3' comprises the operation of performing three weakening lines 16' in the panel 3', in a manner to obtain panel 3' for manufacturing a duct 15' with a quadrangular section.

With special reference to figures 1a - 1e, will be now described a preferred embodiment of a method of joining the ends of the panel 3 made of pre-insulated material.

According to the preset invention, the method comprises the steps shown respectively in figure 1a and 1d of:
a. preparing at least one panel 3 made of pre-insulated material as described previously;
b. nearing the opposite end portions 2 of said panel 3 and joining them by means of at least one joining device 4, as described previously.

Figures 4a - 4d show the same method implemented on a panel of a different type through analogous means.

With reference to the same figures 1a - 1e, will be now described a preferred embodiment of a method of manufacturing ducts 15 for air-conditioning systems. Said method, according to said embodiment of the invention, comprises the steps of:
i. providing at least one panel 3 made of pre-insulated material as described previously;
ii. nearing the end portions 2 of said panel 3 and joining them by means of at least one joining device 4, as described previously in such a manner to form a duct 15.

According to an alternative embodiment, the method of manufacturing a duct 15 for air-conditioning systems, comprises the steps of:
i'. providing a panel 3 made of pre-insulated material provided with at least one weakening line 16 as described previously;
ii'. suitably bending the panel 3 following the bending direction substantially transverse to the weakening lines 16;
iii'. nearing the end portions 2 of said panel 3 and joining them by means of at least one joining device 4, as described previously in such a manner to form a duct 15.

Upstream step ii', it is possible to provide the step of:
- applying an amount of glueing agent at the weakening lines 16.

Figures 4a - 4d show the same method implemented on a panel of different type through analogous methods.

The embodiments of the joint system, the joining device, the panel and the duct and the embodiments of the related methods of manufacturing the panels, panel joints and manufacturing of ducts herein described and illustrated, are illustrative and non-limiting examples of the invention. Variants and/or modifications can be performed on them by men skilled in the art without departing from the protection scope of the patent.

## Claims

1. A joint system (1, 1') for joining end portions (2, 2') of at least one panel (3, 3') made of pre-insulated material comprising a joining device (4, 4', 4") provided, at opposite parts of a longitudinal centre line plane (π) of the same, with a first (5 5' 5") and second (6, 6', 6") longitudinal seat, each of said seats (5; 5'; 5", 6; 6'; 6") being adapted to house one of said end portions (2, 2') of said at least one panel (3; 3'), said joining device (4, 4', 4") comprising means (8; 8'; 8") for being fixed to the panel (3; 3') adapted to be engaged in a removable manner with respective fixing countermeans associated with said at least one panel (3; 3').

2. A joint system (1; 1') according to claim 1, wherein said fixing countermeans comprise grooves (7; 7'), obtained at the end portions (2; 2') of the panel (3, 3') adapted to be engaged in a removable manner with said fixing means (8; 8'; 8") of the joining device (4; 4'; 4").

3. A joint system (1; 1') according to claim 2, wherein said grooves (7; 7') are obtained in the thickness of the panel (3; 3').

4. A joint system (1; 1') according to any one of the previous claims wherein said joining device (4; 4'; 4") comprises a radially internal shaped guide flap (12; 12'; 12") and a radially external shaped guide flap (13; 13'; 13 ") extended astride the longitudinal centreline plane (π) of the joining device (4; 4'; 4") itself and connected to each other by at least one central body (14; 14'; 14"), said radially internal (12; 12'; 12") and external (13; 13'; 13") shaped guide flaps and said at least one central body (14; 14'; 14") defining the first (5; 5'; 5") and the second seat (6; 6'; 6") housing the end portions (2; 2') of the panel (3; 3').

5. A joint system (1; 1') according to claim 4, wherein said radially internal shaped guide flap (12; 12'; 12") and said radially external shaped guide flap (13; 13'; 13") comprise two semi-portions of shaped guide flap, symmetrically arranged with respect to the longitudinal centreline plane (π) and forming respectively angles α and β with said longitudinal centreline plane (π).

6. A joint system (1; 1') according to claim 5, wherein said angles α and β are substantially equal.

7. A joint system (1; 1') according to claim 5 or 6, wherein angle α is comprised in the range between 20° and 90°.

8. A joint system according to any one of claims 5 - 7, wherein angle β is comprised in the range between 20° and 90°.

9. A joint system (1; 1') according to any one of claims 4 - 8, wherein said fixing means (8; 8'; 8") comprise at least two fixing flaps rigidly connected to said central body (14, 14'; 14"), such flaps forming an angle γ with said longitudinal centreline plane (π).

10. A joint system (1; 1') according to claim 9, wherein said angle γ is substantially equal to angles α and β.

11. A joint system (1; 1') according to claim 9 or 10, wherein said angle γ is comprised in the range between 20° and 90°.

12. A joint system (1; 1') according to any one of claims 9 - 11, wherein said fixing flaps are substantially T-shaped.

13. A joint system according to any of the previous claims, wherein said joining device (4") is provided with means for housing an angular element.

14. A joint system according to claim 13, wherein said housing means comprise a gap (17) adapted for insertion of said angular element..

15. A joint system (1; 1') according to any one of the previous claims, wherein said joining device (4; 4'; 4") is made of polymeric material.

16. A joint system (1; 1') according to claim 15, wherein said joining device (4; 4'; 4") is made of at least one of the following materials: polyvinyl chloride, nylon, polymeric material reinforced with reinforcement fibres.

17. A joint system (1; 1') according to claim 16, wherein said polymeric material comprises a thermosetting resin.

18. A joint system (1; 1') according to claim 16 or 17, wherein said reinforcement fibres are selected from the group comprising: glass fibres, aramidic fibres and carbon fibres.

19. A joint system (1; 1') according to any one of claims 1-14, wherein said joining device (4; 4'; 4") is made of metallic material.

20. A joint system (1; 1') according to claim 19, wherein said joining device (4; 4'; 4") is made of aluminium.

21. A joining device (4; 4'; 4") for joining end portions (2; 2') of at least one panel(3; 3') made of pre-insulated material provided, at opposite parts of a longitudinal centreline plane (π) of the same, with a first (5; 5'; 5") and a second (6; 6'; 6") longitudinal seat, each of said seats (5; 5'; 5", 6; 6'; 6") being adapted to house one of said end portions (2; 2') of said at least one panel (3; 3'), said joining device (4; 4'; 4") comprising means (8; 8'; 8") for being fixed to the panel (3; 3').

22. A joining device (4; 4'; 4") according to claim 21, comprising a radially internal shaped guide flap (12; 12'; 12") and a radially external shaped guide flap (13; 13'; 13") extended astride the longitudinal centreline plane (π) of the joining device (4; 4'; 4") itself and connected to each other by means of at least one central body (14; 14'; 14"), said radially internal (12; 12'; 12") and external (13; 13'; 13") shaped guide flaps and said at least one central body (14; 14'; 14") defining the first (5; 5'; 5") and the second (6; 6'; 6") seat for housing end potions (2; 2') of the panel (3; 3').

23. A joining device (4; 4'; 4") according to claim 22, wherein said radially internal shaped guide flap (12; 12'; 12") and said radially external shaped guide flap (13; 13'; 13") comprise two semi-portions of shaped guide flap, symmetrically arranged with respect to the longitudinal centreline plane (π) and respectively forming angles α and β with said longitudinal centreline plane (π).

24. A joining device (4; 4'; 4") according to claim 23, wherein said angles α and β are substantially equal.

25. A joining device (4; 4'; 4") according to claim 23 or 24, wherein angle α is comprised in the range between 20° and 90°.

26. A joining device (4; 4'; 4") according to any one of claims 23 - 25, wherein angle β is comprised in the range between 20° and 90°.

27. A joining device (4; 4'; 4") according to any one of claims 21 - 26, wherein said fixing means (8; 8'; 8") comprise at least two fixing flaps rigidly connected to said central body (14, 14'; 14"), such fixing flaps forming an angle γ with said longitudinal centreline plane (π).

28. A joining device (4; 4'; 4") according to claim 27, wherein said angle γ is substantially equal to α and β.

29. A joining device (4; 4'; 4") according to claim 27 or 28, wherein said angle γ is comprised in the range between 20° and 90°.

30. A joining device (4; 4'; 4") according to any one of claims 27 - 29, wherein said fixing flaps are substantially T-shaped.

31. A joining device (4") according to any one of claims 21 - 30, further provided with means for housing an angular element.

32. A joining device (4") according to claim 31, wherein said housing means comprise a gap (17) adapted for the insertion of said angular element.

33. A joining device (4; 4'; 4") according to any one of claims 21 - 32, wherein said joining device (4; 4'; 4") is made of polymeric material.

34. A joining device (4; 4'; 4") according to claim 33, wherein said joining device (4; 4'; 4") is made of at least one of the following materials: polyvinyl chloride, nylon, polymeric material reinforced with reinforcement fibres.

35. A joining device (4; 4'; 4") according to claim 34, wherein said polymeric material comprises a thermosetting resin.

36. A joining device (4; 4'; 4") according to claim 34 or 35, wherein said reinforcement fibres are selected from the group comprising: glass fibres, aramidic fibres and carbon fibres.

37. A joining device (4; 4'; 4") according to any one of claims 21 - 32, wherein said joining device (4; 4'; 4") is made of metallic material.

38. A joining device (4; 4'; 4") according to claim 37, wherein said joining device (4; 4'; 4") is made of aluminium.

39. A panel (3; 3') made of pre-insulated material for manufacturing a duct (15; 15') for air-conditioning systems comprising fixing countermeans adapted to be engaged in a removable manner with respective fixing means (8; 8'; 8") associated with a joining device (4; 4'; 4") according to any one of claims 21 - 38.

40. A panel (3; 3') made of pre-insulated material according to claim 39 wherein said fixing countermeans comprise grooves (7; 7'), obtained at the end portions (2; 2') of the panel (3; 3') itself.

41. A panel (3; 3') made of pre-insulated material according to claim 40, wherein said grooves (7; 7') are obtained in the thickness of the panel (3; 3') itself.

42. A panel (3; 3') made of pre-insulated material according to any one of claims 39 - 41, comprising at least one weakening line (16; 16').

43. A panel (3; 3') made of pre-insulated material according to any one of claims 39 - 42, comprising at least one external layer (9; 9') and one insulating layer (10; 10').

44. A panel (3; 3') made of pre-insulated material according to any one of claims 39 - 43, comprising an external layer (9; 9'), an internal layer (11; 11') and one insulating layer (10; 10') interposed between said external layer (9; 9') and said internal layer (11; 11').

45. A panel (3; 3') according to claim 44, wherein at least one among said external layer (9; 9') and said internal layer (11; 11') comprises aluminium.

46. A panel (3; 3') according to any one of claims 43 - 45, wherein said insulating layer (10; 10') comprises at least one of the materials selected from the group comprising: expanded polyurethane, expanded polyisocyanurate, phenolic foam, mineral wools.

47. A duct (15; 15') for air-conditioning systems comprising:
- at least one panel (3; 3') made of pre-insulated material according to any one of claims 39 - 46; and
- at least one joining device (4; 4'; 4") according to any one of claims 21 - 38.

48. A method of manufacturing panels (3; 3') made of pre-insulated material for manufacturing ducts (15; 15') for air conditioning systems comprising the steps of:
- providing at least one panel (3; 3') made of pre-insulated material;
- providing the panel (3; 3') with fixing countermeans adapted to be engaged in a removable manner with respective fixing means (8; 8'; 8") associated with a joining device (4; 4'; 4") according to any one of claims 21 - 38.

49. A method of manufacturing panels (3; 3') according to claim 48, wherein said step of providing the panel (3; 3') with fixing countermeans comprises the operation of performing grooves (7; 7') at the end portions (2; 2') of the panel (3; 3').

50. A method of manufacturing panels (3; 3') according to claim 49, wherein said grooves (7; 7') are obtained in the thickness of the panel (3; 3').

51. A method of manufacturing panels (3; 3') according to any one of claims 48 - 50, further comprising the step of performing at least one weakening line (16, 16') in the panel (3; 3').

52. A method of manufacturing panels (3) according to claim 51, comprising the operation of performing seven weakening lines (16) in the panel (3) in such a manner to obtain a panel (3) for manufacturing a duct (15) with an octagonal section.

53. A method of manufacturing panels (3') according to claim 51, comprising the operation of performing three weakening lines (16') in the panel (3') in such a manner to obtain a panel (3') for manufacturing a duct (15') with a quadrangular section.

54. A method of joining the ends of panels (3; 3') made of pre-insulated material comprising the steps of:
a. providing at least one panel (3; 3') made of pre-insulated material according to any one of claims 39 - 46;
b. nearing the end portions (2; 2') of said at least one panel (3; 3') and joining them by means of a joining device (4; 4'; 4") according to any one of claims 21 - 38.

55. A method of manufacturing a duct (15; 15') for air-conditioning systems, comprising the steps of:
i. providing at least one panel (3; 3') made of pre-insulated material according to any one of claims 39 - 46;
ii. nearing the end portions (2; 2') of said at least one panel (3; 3') and joining them by means of at least one joining device (4; 4'; 4") according to any one of claims 21 - 38 in such a manner to form a duct (15; 15').

56. A method of manufacturing a duct (15; 15') for air-conditioning systems, comprising the steps of:
i'. providing at least one panel (3; 3') made of pre-insulated material according to claim 42 or any one of claims 43 - 46 when depending on claim 42;
ii'. suitably bending the panel (3, 3') following the bending direction substantially transverse to the weakening lines (16; 16');
iii'. nearing the end portions (2; 2') of said panel (3; 3') and joining them by means of at least one joining device (4; 4'; 4") according to any one of claims 21 - 38 in such a manner to form a duct (15; 15').

57. A method of manufacturing a duct (15; 15') for air-conditioning systems according to claim 56, comprising, upstream step ii", a step of applying an amount of glueing agent at the weakening lines (16, 16').
